# EUROPÄISCHE PATENTSCHRIFT

(11) **EP 1 082 242 B1**
(45) Veröffentlichungstag und Bekanntmachung des Hinweises auf die Patenterteilung: **11.09.2002**
(21) Anmeldenummer: 99924957.6
(22) Anmeldetag: 12.05.1999
(51) Int. Cl.: B60T 8/36

(54) **VERFAHREN UND VORRICHTUNG ZUR BREMSDRUCKEINSTELLUNG ANHAND EINES DRUCKMODELLS**
METHOD AND DEVICE FOR BRAKE PRESSURE REGULATION USING A PRESSURE MODEL
PROCEDE ET DISPOSITIF POUR REGLER LA PRESSION DE FREINAGE AU MOYEN D'UN MODELE DE PRESSION

(30) Priorität: 05.06.1998 DE 19825273; 13.08.1998 DE 19836686
(43) Veröffentlichungstag der Anmeldung: 14.03.2001
(73) Patentinhaber: Continental Teves AG & Co. oHG, 60488 Frankfurt am Main (DE)
(72) Erfinder: KAHL, Harald, D-65556 Limburg (DE); HARTMANN, Bernd-Uwe, D-63584 Gründau (DE)
(86) Internationale Anmeldenummer: EP9903279
(87) Internationale Veröffentlichungsnummer: WO99064282

(56) Entgegenhaltungen:
- DE-A- 3 928 649
- DE-A- 4 406 235
- DE-A- 19 609 869
- DE-A- 19 712 889

## Beschreibung

Die Erfindung betrifft ein Verfahren und eine Vorrichtung zur Bremsdruckeinstellung einer hydraulischen Radbremse.

In modernen Bremsanlagen von Fahrzeugen, insbesondere Kraftfahrzeugen, werden die Bremsdrücke an den jeweiligen Radbremsen nach Maßgabe verschiedener Parameter geregelt. Ein übergeordneter Regelkreis hat dabei bei einer tatsächlichen Bremsung Regelungsziele wie Verzögerungsoptimierung, Lenkoptimierung oder Stabilitätsoptimierung. Hierzu werden nach Maßgabe verschiedener Kriterien bzw. Abläufe die Radbremsen angesprochen, insbesondere indem ihnen ein bestimmter Solldruck vorgegeben wird. In einer unterlagerten Regelung wird dieser Solldruck eingestellt. Die unterlagerte Regelung empfängt demnach den Solldruck als Eingangsgröße und erzeugt Ansteuersignale für Ventile, ggf. Bremskraftverstärker oder eine Hydraulikpumpe, um den Solldruck einzustellen. Unter anderem wird hierzu der Ist-Druck für die jeweilige Radbremse ermittelt, um daraus zusammen mit dem Solldruck die Regelabweichung bilden und weitere geeignete Maßnahmen treffen zu können.

In modernen Bremsanlagen wird daher der Bremsdruck nicht durch Sensorik gemessen, sondern anhand eines Modells bestimmt siehe z.B. DE-A-19609869. Dies hat den Vorteil, daß Sensoren und entsprechender Verkabelungsaufwand entfallen können.

Das Druckmodell empfängt benötigte Eingangsgrößen und bestimmt daraus sowie nach Maßgabe von Systemparametern den in der jeweiligen Bremse herrschenden Ist-Druck. Insbesondere kann das Druckmodell die Steuersignale empfangen, die den Bremsdruck an der jeweils betrachteten Bremse beeinflussen, also beispielsweise Signale für Zulaufventile, Ablaufventile, für eine Hydraulikpumpe oder ähnliches. Aus diesen Signalen sowie aus Systemparametern (beispielsweise Leitungsquerschnitte, Viskosität des Hydraulikfluids, Schaltcharakteristika usw.) kann das Modell den Ist-Druck parallel zum Aufbau des Drucks in der jeweiligen Radbremse ermitteln, so daß durch Ausgabe des so anhand des Modells ermittelten Ist-Drucks der unterlagerte Regelkreis geschlossen werden kann.

Eine Schwierigkeit bestehender Systeme liegt darin, den Einfluß schwankender Temperaturen zu berücksichtigen. Bei niedrigen Temperaturen sinkt die Viskosität des Hydraulikfluids, in der Regel Hydrauliköl. Prinzipiell kann dieser Einfluß durch weitere Sensoren erkannt werden. Will man jedoch auch hier auf zusätzliche Sensorik verzichten, können andere Strategien gewählt werden: eine ist es, den Wert des durch das Druckmodell ermittelten Ist-Drucks auf einen maximalen Systemdruck hin zu überprüfen. Dem liegt folgende Überlegung zugrunde: Aufgrund der erhöhten Viskosität des (noch kalten)
Hydrauliköls wird der tatsächliche Druck dem anhand des Modells ermittelten Ist-Druck hinterherhinken. Dies führt dazu, daß der durch das Modell ermittelte Ist-Druck schließlich Systemgrenzen übersteigt, die im praktischen Betrieb nicht verwendet werden. Bei einer solchen Situation wird darauf erkannt, daß das Hydraulikfluid noch kalt ist. Diese Erkenntnis wird in geeigneter Weise in Regelungsstrategien einbezogen.

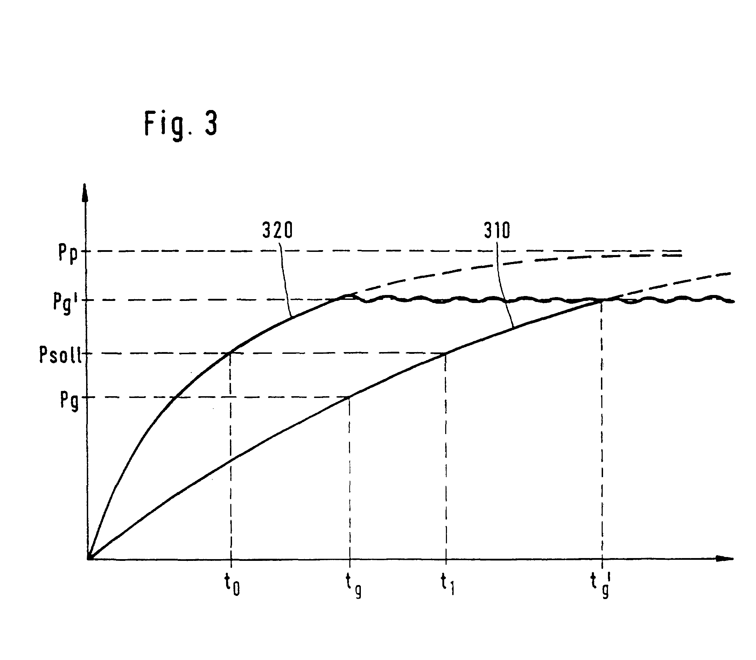

Nachteil dieses Verfahrens ist es, daß viel Zeit vergeht, bis der möglicherweise kritische Zustand erkannt wird. Dies zeigt sich anhand von Fig. 3. Dort sind verschiedene Druckaufbaukurven über der Zeit gezeigt. Kurve 320 ist eine Kurve, die den Druckaufbau bei warmem Fluid zeigt. Soll ein Bremsdruck Psoll aufgebaut werden, baut er sich bei warmem Fluid längs der Kurve 320 auf und erreicht den Wert Psoll zum Zeitpunkt t₀. Ist das Hydraulikfluid dagegen (noch) kalt, erfolgt wegen der geringeren Viskosität der Aufbau längs der Kurve 310, und der Wert Psoll wird erst zum Zeitpunkt t₁ erreicht. Beide Kurven 310 und 320 können qualitativ entsprechend einer Exponentialfunktion mit negativem Exponenten steigen, da der weitere Druckaufbau vom Differenzdruck zwischen Druckquelle und System abhängt. In beiden Fällen wäre der Endwert der maximal mögliche Systemdruck, wie er beispielsweise durch die Hydraulikpumpe oder durch den Bremskraftverstärker erzeugt werden kann. Der Bremsdruck Pp entspricht dem maximal erzeugbaren Bremsdruck. Dieser wird schon deshalb i.d.R. nicht erreicht, weil in der Bremsanlage Sicherheitsventile vorgesehen sind, die vorher öffnen, etwa beim Grenzdruck Pg'. Über diesen Wert hinaus wird der Druck in der Bremsanlage deshalb nicht steigen. Der Druck Pg' wurde als Kriterium für die Abfrage verwendet, so daß sich eine langsame Erkennung ergibt.

Der obige Nachteil zeigt sich insbesondere bei modernen Antriebsschlupf-Regelsystemen. Dort wird der Antriebsschlupf häufig über einen Bremseingriff auf gewünschte Werte eingestellt. Es arbeiten demnach Antrieb und Bremse gegeneinander. Dies kann beispielsweise bei schwierigen Fahrmanövern wie Anfahren bei seitenweise unterschiedlichen Reibwerten, insbesondere am Berg, wichtig werden. Die Räder einer Seite können sich auf hohem Reibwert befinden und dadurch mehr oder minder normal greifen, während sich die anderen auf niedrigem Reibwert befinden (Schnee bzw. Eis), so daß diese a priori durchdrehen können, so daß ein positiver Schlupf entsteht (Radgeschwindigkeit schneller als Fahrzeuggeschwindigkeit). Im Extremfall kann dann kein Antriebsmoment dem Fahrzeug zur Verfügung gestellt werden, da über das Differential die gesamte Antriebsleistung in das durchdrehende Rad fließt und das greifende Rad nicht angetrieben wird. Ein Bremseingriff am durchdrehenden Rad führt hier dazu, daß dem Fahrzeug über das greifende Rad ein vorwärtstreibendes Moment zugeführt werden kann. Dies soll so früh wie möglich geschehen, damit dem Fahrzeug möglichst früh ein vorwärtstreibendes Moment zur Verfügung gestellt werden kann. Wenn dann Zeit verlorengeht, kann dies nachteilige Auswirkungen haben, beispielsweise dahingehend, daß das Fahrzeug ruckwärtsrollt, oder daß Motor und Bremse unnötig lange gegeneinander arbeiten. Andererseits kann durchaus ein hoher Antriebsschlupf wünschenswert sein, um auf der Niedrig-Reibwert-Seite ein Stützmoment zu erzeugen.

Aufgabe der Erfindung ist es, eine Antriebsschlupfregelung anzugeben, die ohne zusätzliche Sensorik Fehlanpassung eines Druckmodells schnell erkennt.

Diese Aufgabe wird mit den Merkmalen der unabhängigen Ansprüche gelöst. Abhängige Ansprüche sind auf bevorzugte Ausführungsformen der Erfindung gerichtet.

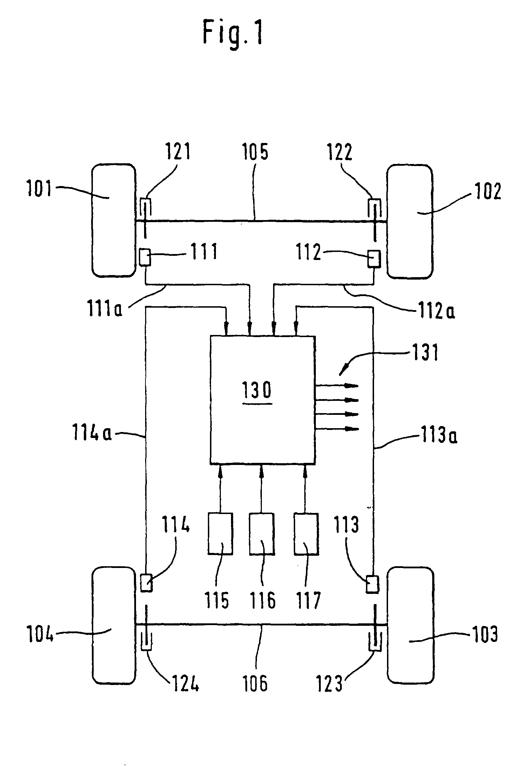

Fig. 1 zeigt schematisch ein Fanrzeug, in dem die Erfindung angewendet werden kann. Bezugsziffern 101 bis 104 zeigen Räder des Fahrzeugs, und zwar 101 links vorne, 102 rechts vorne, 103 rechts hinten und 104 links hinten. 105 ist die Vorderachse, 106 die Hinterachse. An den Rädern sind Radbremsen 121, 122, 123, 124 vorgesehen. Außerdem weist jedes Rad einen Radsensor (111 bis 114) auf, die über entsprechende Leitungen (111a bis 114a) Signale einer Regelung 130 zuführen. Diese Regelung kann auch Eingangssignale weiterer Sensoren oder Komponenten 115 bis 117 empfangen und erzeugt Ausgangssignale 131 zur Ansteuerung der Radbremsen 121 bis 124 und ggf. weiterer (nicht gezeigter) Komponenten wie Motorschnittstelle und ähnliches. Mit letzterer kann auch das Antriebsmoment beeinflußt werden.

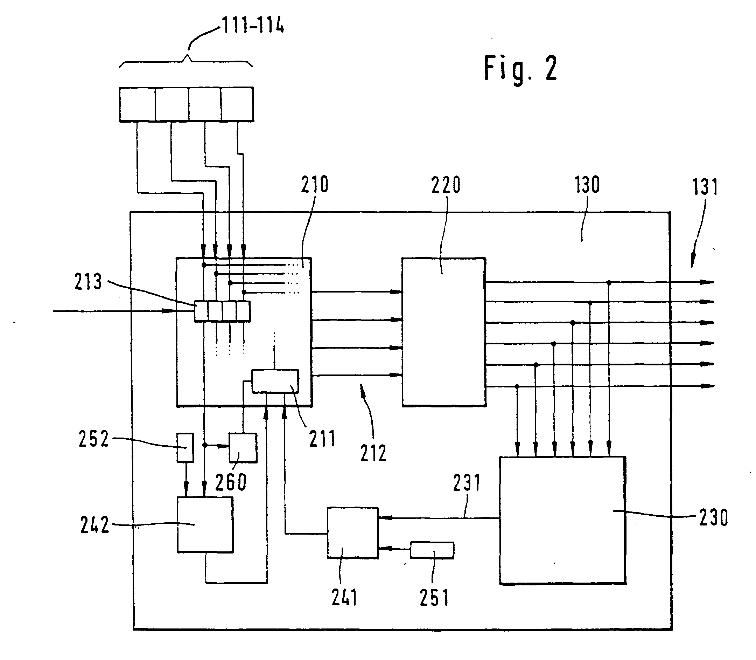

Fig. 2 zeigt eine erfindungsgemäße Vorrichtung. Gleiche Bezugszeichen wie in Fig. 1 bedeuten gleiche Komponenten.

Die Regelung 130 weist eine Regelungskomponente 210 auf, die eine herkömmliche Regelung ausführt, z.B. eine Bremsoder Antriebsschlupfregelung. Sie empfängt Eingangssignale, insbesondere die Signale 111a bis 114a aus den Radsensoren 111 bis 114 sowie weitere Signale, beispielsweise die Fahrzeugreferenzgeschwindigkeit oder ähnliches. Nach Maßgabe dieser Werte erzeugt sie unter Heranziehung nicht näher beschriebener Regelungsstrategien Ausgangssignale 212, die u.a. einen Sollwert für den Druckgradienten für zumindest ein angetriebenes Rad darstellen. Eine erste Ermittlungseinrichtung 220 erzeugt daraus Ansteuersignale 131 für entsprechende Ventile der hydraulischen Bremse, um Bremsdruck entweder zu erhöhen oder abzusenken. Darüber hinaus können Ansteuersignale für eine Hydraulikpumpe und ggf. auch für die Motorschnittstelle erzeugt werden.

Eine zweite Ermittlungseinrichtung 230 ermittelt den Ist-Druck. Die zweite Ermittlungseinrichtung 230 ist ein Druckmodell, das geeignete Eingangsgrößen empfängt, in der gezeigten Ausführungsform die Signale 131, also die zur Steuerung des Bremsdrucks verwendeten Signale. Aus diesen Signalen berechnet das Bremsdruckmodell 230 den Ist-Druck und gibt ihn als Signal 231 aus.

Gezeigt ist hier lediglich der Signalstrang eines angetriebenen Rades. Die Berechnung kann in gleicher Weise für die Drücke aller Radbremsen geschehen.

In einer ersten Vergleichseinrichtung 251 wird der Ist-Druck einer Radbremse mit einem Sollwert (aus Einrichtung 251) verglichen. In einer zweiten Vergleichseinrichtung 242 wird der Antriebsschlupf vorzugsweise des gleichen Rades mit einem Schwellenwert aus der Einrichtung 252 verglichen. Der Schlupfschwellenwert aus Einrichtung 252 ist vergleichsweise hoch und kann beispielsweise über 40 oder über 50 km/h liegen.

Wenn ein hoher Antriebsschlupf (im Vergleicher 242) und ein hoher Ist-Druck in der Bremsanlage (im Vergleicher 241) festgestellt wird, wird eine Veränderungseinrichtung 211 angesprochen, die daraufhin insbesondere den Soll-Bremsdruckgradienten erhöht. Durch Erhöhung des Solldruckgradienten wird eine schnellere Zunahme des Drucks bewirkt, so daß die eingangs genannte nachteilige Situation schnell beendet ist. Insbesondere ist sie dann schnell beendet, wenn die erste Vergleichseinrichtung 241 den Ist-Druck aus Einrichtung 230 nicht mit dem maximal möglichen Systemdruck vergleicht, sondern mit einem niedrigeren Wert. Da bei der Antriebsschlupfregelung schon vergleichsweise geringe Bremsdrücke ausreichen, eine merkliche Abbremsung herbeizuführen, ist anders herum gesehen ein Bremsdruck, der zwar deutliche werte hat, aber auch deutlich unter dem maximalen Systembremsdruck liegt, ein Anzeichen dafür, daß das Modell der zweiten Ermittlungseinrichtung 230 nicht mit der Realität übereinstimmt, so daß auch ein niedrigerer als der Maximaldruck zur Erkennung der Situation verwendet werden kann.

Indem als Schwellenwert aus der Einrichtung 251 ein Wert genommen wird, der unter dem maximal möglichen Systemdruck Pg' liegt, wird die Ansprechgeschwindigkeit des erfindungsgemäßen Verfahrens bzw. der erfindungsgemäßen Vorrichtung erhöht, denn es muß nicht viel Zeit vergehen, bis zum Zeitpunkt t_{g}' das Modell 230 bis zum maximal möglichen Systemdruck Pg' hochgerechnet hat. Vielmehr wird der Grenzwert Pg zum Zeitpunkt t_{g} viel früher erreicht, so daß auch geeignete Gegenmaßnahmen früher getroffen werden können. Die Zeitersparnis ist dabei größer als das prozentuale Verhältnis zwischen Pg' und Pg, da ersterer im flachen Teil der Druckaufbaukurve 310 oder 320 liegt und deshalb überproportional viel Zeit benötigt, um erreicht zu werden. Der Grenzwert Pg liegt unter dem maximal möglichen Systemdruck und beträgt vorzugsweise weniger als 70 % des maximal möglichen Bremsdrucks, weiter vorzugsweise weniger als 60 % des maximal möglichen Bremsdrucks.

Durch das beschriebene Verfahren bzw. mit der beschriebenen Vorrichtung können Auswirkungen eines (noch) kalten Hydraulikfluids schnell erkannt werden. Als Gegenmaßnahme kann der Druckgradient, wie er durch die Regelungskomponente 210 als Sollwert vorgegeben wird, erhöht werden, beispielsweise indem die Pausen zwischen Druckaufbauimpulsen verkürzt oder die Druckaufbauimpulse selbst verlängert oder erhöht werden. Der tatsächlich sich einstellende Druckaufbaugradient entspricht dann zwar nach wie vor nicht dem von der Regelungskomponente 210 vorgegebenen Sollwert, wird aber immerhin höher, so daß er sich zumindest dem vorher gewünschten Sollwert annähert. Die unterlagerte Bremsdruck(gradienten)regelung verliert dann ihre Eigenschaft, eine Regelung zu sein, und wird zu einer Steuerung.

Der erste Schwellenwert (in Fig. 3 P_{g}) kann variabel und durch eine erste Bestimmungseinrichtung 251 bestimmbar sein. Die Bestimmung kann nach Maßgabe von Betriebszuständen des Fahrzeugs und/oder nach Maßgabe interner Signale der Regelung 130 erfolgen. Das Gleiche gilt für das Ausmaß der Veränderung des Druckgradienten durch die Veränderungseinrichtung 211. Der zweite Schwellenwert kann in einer zweiten Bestimmungseinrichtung 252 bestimmt sein oder bestimmt werden. Die Bestimmung kann in Abhängigkeit von Fahrzeugparametern,

Betriebszuständen des Fahrzeugs oder internen Signalen erfolgen. Die Schwellenwerte können auch feste Werte sein. Die Bestimmungseinrichtungen 251, 252 hätten dann die Funktion von Registern.

Das Zurücksetzen der Veränderung des Bremsdruckgradienten kann erfolgen, wenn eine der Vergleichseinrichtungen 241, 242 ein Unterschreiten des von ihr jeweils überwachten Schwellenwertes feststellt. Andererseits hat sich herausgestellt, daß dies als Abbruchkriterium zu spät sein kann, weil langfristig zu starke Bremseingriffe erfolgen. Deshalb kann ein anderes Abbruchkriterium sein, den Schlupfgradienten zu überwachen. Hierzu kann eine Schlupfgradienten-Ermittlungseinrichtung 260 vorgesehen sein. Sie überwacht den zeitlichen Verlauf des betrachteten Radschlupfes an der angetriebenen Achse. Wenn der Gradient negativ ist (weil der Schlupf sein Maximum überschritten hat und aufgrund des schneller aufgebauten Bremsdrucks zu sinken beginnt), kann eine weitere Veränderung des Bremsdruckgradienten vorgenommen werden, beispielsweise dahingehend, daß er auf den ursprünglichen wert oder auch einen Zwischenwert gesetzt wird.

Die zweite Ermittlungseinrichtung 230, also das Druckmodell, kann ein Rechner sein, der nach Maßgabe der empfangenen Eingangssignale den Ist-Druck (symbolisiert durch die Leitung 231) errechnet. Genausogut sind Lösungen wie Kennfelder denkbar, so daß sich der Rechenvorgang durch einen Adressiervorgang nach Maßgabe der empfangenen Eingangsgrößen ersetzen läßt. Als Ausgangswert erscheint eine im Kennfeld gespeicherte Größe. In den Formeln bzw. den im Kennfeld tabellierten Werten sind die Charakteristika der Bremsanlage wie Leitungsquerschnitte, Einspeisdrücke usw. berücksichtigt.

Die Veränderung des Bremsdruckgradienten durch die Veränderungseinrichtung 211 kann auch im Hinblick auf das Schwingungsverhalten des Fahrzeugs erfolgen. Insbesondere kann die Veränderung schrittweise erfolgen oder so, daß nur bestimmte Sprünge des Dremsdruckgradienten zugelassen werden.

Da das beschriebene Verfahren bzw. die beschriebene Vorrichtung insbesondere in Fahrsituationen bei niedrigen Geschwindigkeiten, insbesondere beim Anfahren, wirken sollen, kann es weiter vorgesehen sein, die Fahrzeuggeschwindigkeit mit zu berücksichtigen. Beispielsweise kann das Verfahren abgebrochen oder verhindert werden, wenn die Fahrzeuggeschwindigkeit eine Fahrzeuggrenzgeschwindigkeit überschreitet. Der Grenzwert kann bei 20 oder 10 km/h liegen.

## Patentansprüche

1. Verfahren zur Bremsdruckeinstellung einer Radbremse mit den folgenden Schritten:
Ermitteln eines vorläufigen Solldruckgradienten in einer Bremsenregelung,
Ermitteln von Ansteuersignalen für eine hydraulische Pumpe und/oder mindestens ein Hydraulikventil zur Einstellung des Solldruckgradienten,
Ermitteln des Ist-Druckes anhand eines Druckmodells,
Ermitteln des Schlupfes eines angetriebenen Rades,
gekenzeichnet durch die folgenden Schritte:
Vergleichen des Ist-Druckes mit einem ersten Schwellenwert, der niedriger als der maximal mögliche Bremsdruck ist, und Vergleichen des Radschlupfes, sofern es sich um einen Antriebsschlupf handelt, mit einem zweiten Schwellenwert,
wobei dann, wenn der Ist-Druck und der Radschlupf die jeweiligen Schwellenwerte überschreiten, der vorläufige Solldruckgradient heraufgesetzt wird.

2. Verfahren nach Anspruch 1, **dadurch gekennzeichnet, daß** der erste Schwellenwert nach Maßgabe von Betriebszuständen des Fahrzeugs bestimmt wird.

3. Verfahren nach Anspruch 2, **dadurch gekennzeichnet, daß** der erste Schwellenwert kleiner als 60 Prozent des maximal möglichen Bremsdrucks ist.

4. Verfahren nach Anspruch 2 oder 3, **dadurch gekennzeichnet, daß** der erste Schwellenwert und/oder der zweite Schwellenwert nach Maßgabe der Motorisierung und/oder der Achslastverteilung und/oder des Fahrzeuggewichts und/oder der Auslegung der Bremsanlage bestimmt wird.

5. Verfahren nach einem der vorherigen Ansprüche, **dadurch gekennzeichnet, daß** nach der Heraufsetzung des Solldruckgradienten dieser beibehalten wird, bis einer der Schwellenwerte unterschritten wird, wobei er danach geändert wird.

6. Verfahren nach einem der vorherigen Ansprüche, **dadurch gekennzeichnet, daß** nach der Heraufsetzung des Solldruckgradienten dieser beibehalten wird, bis die Schlupfbeschleunigung negativ ist, wobei er danach geändert wird.

7. Verfahren nach einem der vorherigen Ansprüche, **dadurch gekennzeichnet, daß** die Heraufsetzung des Solldruckgradienten nach Maßgabe des Schwingungsverhaltens der Regelung erfolgt.

8. Verfahren nach einem der vorherigen Ansprüche, **dadurch gekennzeichnet, daß** der Solldruckgradient durch Verkürzung der Druckaufbaupausen und/oder durch Erhöhen der Druckaufbauimpulse heraufgesetzt wird.

9. Verfahren nach einem der vorherigen Ansprüche, **dadurch gekennzeichnet, daß** der Solldruckgradient in einer überlagerten Regelung nach Maßgabe des Laufverhaltens eines oder mehrerer Räder ermittelt und in einer unterlagerten Komponente bzw. Regelung nach Maßgabe des ermittelten Ist-Drucks eingestellt wird.

10. Verfahren nach einem der vorherigen Ansprüche, **dadurch gekennzeichnet, daß** beim Ermitteln des Ist-Druckes anhand eines Druckmodells der Ist-Druck nach Maßgabe von Parametern der Bremsanlage sowie nach Maßgabe von Ansteuersignalen für die Bremsanlage ermittelt wird.

11. Verfahren nach einem der vorherigen Ansprüche, **dadurch gekennzeichnet, daß** der zweite Schwellenwert größer als 50 km/h ist.

12. Verfahren nach einem der vorherigen Ansprüche, **dadurch gekennzeichnet, daß** es oberhalb einer Fahrzeuggrenzgeschwindigkeit nicht ausgeführt wird.

13. Verfahren nach einem der vorherigen Ansprüche, **dadurch gekennzeichnet, daß** es Teil eines Antriebsschlupfregelverfahrens ist.

14. Vorrichtung zur Bremsdruckeinstellung einer Radbremse, mit:
einer Regelungskomponente (210) zum Ermitteln eines vorläufigen Solldruckgradienten einer hydraulischen Bremse nach Maßgabe von empfangenen Einganssignalen,
einer ersten Ermittlungseinrichtung (220) zum Ermitteln von Ansteuersignalen für eine hydraulische Pumpe und/oder mindestens ein Hydraulikventil zur Einstellung des Solldruckgradienten,
einer zweiten Ermittlungseinrichtung (230) zum Ermitteln des Ist-Druckes anhand eines Druckmodells,
Radsensoren (111-114) zum Ermitteln des Laufverhaltens eines angetriebenen Rades, wobei daraus der Schlupf dieses Rades ermittelt wird,
**gekennzeichnet durch**
eine erste Vergleichseinreichtung (241) zum Vergleichen des Ist-Druckes aus der zweiten Ermittlungseinrichtung (230) mit einem ersten Schwellenwert, der niedriger als der maximal mögliche Bremsdruck ist,
eine zweite Vergleichseinreichtung (242) zum Vergleichen des Radschlupfes, sofern es sich um einen Antriebsschlupf handelt, mit einem zweiten Schwellenwert, und
eine Veränderungseinrichtung (211), die dann, wenn der Ist-Druck und der Radschlupf die jeweiligen Schwellenwerte überschreiten, den vorläufige Solldruckgradient heraufsetzt.

15. Vorrichtung nach Anspruch 14, **gekennzeichnet durch** eine erste Bestimmungseinrichtung (251), die den ersten Schwellenwert nach Maßgabe von Betriebszuständen des Fahrzeugs bestimmt.

16. Vorrichtung nach Anspruch 15, **dadurch gekennzeichnet, daß** die erste Bestimmungseinrichtung (251) den ersten Schwellenwert zu kleiner als 60 Prozent des maximal möglichen Bremsdrucks bestimmt.

17. Vorrichtung nach Anspruch 15 oder 16, **dadurch gekennzeichnet, daß** der erste Schwellenwert und/oder der zweite Schwellenwert nach Maßgabe der Motorisierung und/oder der Achslastverteilung und/oder des Fahrzeuggewichts und/oder der Auslegung der Bremsanlage bestimmt wird.

18. Vorrichtung nach einem der Ansprüche 14 bis 17, **dadurch gekennzeichnet, daß** nach der Heraufsetzung des Solldruckgradienten dieser beibehalten wird, bis einer der Schwellenwerte unterschritten wird, wobei er danach geändert wird.

19. Vorrichtung nach einem der Ansprüche 14 bis 18, **gekennzeichnet durch** eine Schlupfbeschleunigungs-Bestimmungseinrichtung (260), die auf die Veränderungseinrichtung (211) einwirkt.

20. Vorrichtung nach einem der Ansprüche 14 bis 19, **dadurch gekennzeichnet, daß** die Veränderungseinrichtung (211) die Verkürzung der Druckaufbaupausen und/oder die Erhöhung der Druckaufbauimpulse bewirkt.

21. Vorrichtung nach einem der Ansprüche 14 bis 20, **gekennzeichnet durch** eine überlagerte und zumindest nach Maßgabe des Laufverhaltens eines oder mehrerer Räder wirkende Bremesenregelung und eine unterlagerte Komponente bzw. Regelung zur Einstellung des Solldruckgradienten nach Maßgabe des ermittelten Ist-Drucks.

22. Vorrichtung nach einem der Ansprüche 14 bis 21, **dadurch gekennzeichnet, daß** die zweite Ermittlungseinrichtung (230) Ausgangswerte der ersten Ermittlungseinrichtung (220) empfängt und daraus sowie nach Maßgabe von Parametern der Bremsanlage den Ist-Druck anhand eines Druckmodells ermittelt.

23. Vorrichtung nach einem der Ansprüche 14 bis 22, **dadurch gekennzeichnet, daß** sie Teil einer Antriebsschlupfregelung ist.

## Claims

1. Method for brake pressure adjustment in a wheel brake by means of the following steps:
determining a preliminary nominal pressure gradient in a brake control,
determining actuating signals for a hydraulic pump and/or at least one hydraulic valve for the adjustment of the nominal pressure gradient,
determining the actual pressure by means of a pressure model,
determining the slip of a driven wheel,
**characterized by** the following steps:
comparing the actual pressure with a first threshold value which is lower than the maximum possible brake pressure and comparing the wheel slip, if said is a traction slip, with a second threshold value,
wherein the preliminary nominal pressure gradient is augmented when the actual pressure and the wheel slip exceed the respective threshold values.

2. Method as claimed in claim 1,
**characterized in that** the first threshold value is determined according to operating conditions of the vehicle.

3. Method as claimed in claim 2,
**characterized in that** the first threshold value is lower than 60 percent of the maximum possible brake pressure.

4. Method as claimed in claim 2 or 3,
**characterized in that** the first threshold value and/or the second threshold value are/is determined according to the engine power, and/or the axle load distribution, and/or the vehicle weight, and/or the design of the brake system.

5. Method as claimed in any one of the preceding claims,
**characterized in that** after raising the nominal pressure gradient, the latter is maintained until values drop below one of the threshold values, and will be changed thereafter.

6. Method as claimed in any one of the preceding claims,
**characterized in that** after raising the nominal pressure gradient, the latter is maintained until the slip acceleration becomes negative, and will be changed thereafter.

7. Method as claimed in any one of the preceding claims,
**characterized in that** raising the nominal pressure gradient is effected according to the vibration behavior of the control.

8. Method as claimed in any one of the preceding claims,
**characterized in that** the nominal pressure gradient is raised by shortening the pressure increase pauses and/or by increasing the pressure increase pulses.

9. Method as claimed in any one of the preceding claims,
**characterized in that** the nominal pressure gradient is determined in a primary control according to the running behavior of one or more wheels and is adjusted in a secondary component or control according to the actual pressure determined.

10. Method as claimed in any one of the preceding claims,
**characterized in that** when determining the actual pressure according to a pressure model, the actual pressure is determined according to parameters of the brake system as well as according to actuating signals for the brake system.

11. Method as claimed in any one of the preceding claims,
**characterized in that** the second threshold value is higher than 50 km/h.

12. Method as claimed in any one of the preceding claims,
**characterized in that** the method is not performed above a vehicle limit speed.

13. Method as claimed in any one of the preceding claims,
**characterized in that** the method is part of a traction slip control method.

14. Device for brake pressure adjustment in a wheel brake, comprising:
a control component (210) for determining a preliminary nominal pressure gradient of a hydraulic brake according to input signals received,
a first discovering device (220) for determining actuating signals for a hydraulic pump and/or at least one hydraulic valve for adjusting the nominal pressure gradient,
a second discovering device (230) for determining the actual pressure by way of a pressure model,
wheel sensors (111-114) for determining the running behavior of a driven wheel, and the slip of this wheel is determined from this behavior,
**characterized by**
a first comparing device (241) for comparing the actual pressure from the second discovering device (230) with a first threshold value which is lower than the maximum possible brake pressure,
a second comparing device (242) for comparing the wheel slip, if said is a traction slip, with a second threshold value, and
a changing device (211) which, if the actual pressure and the wheel slip exceed the respective threshold values, raises the preliminary nominal pressure gradient.

15. Device as claimed in claim 14,
**characterized by** a first determining device (251) which determines the first threshold value according to operating conditions of the vehicle.

16. Device as claimed in claim 15,
**characterized in that** the first determining device (251) determines the first threshold value to be lower than 60 percent of the maximum possible brake pressure.

17. Device as claimed in claim 15 or 16,
**characterized in that** the first threshold value and/or the second threshold value are/is determined according to the engine power, and/or the axle load distribution, and/or the vehicle weight, and/or the design of the brake system.

18. Device as claimed in any one of claims 14 to 17,
**characterized in that** after raising the nominal pressure gradient, the latter is maintained until values drop below one of the threshold values, and will be changed thereafter.

19. Device as claimed in any one of claims 14 to 18,
**characterized by** a slip acceleration determining device (260) which acts upon the changing device (211).

20. Device as claimed in any one of claims 14 to 19,
**characterized in that** the changing device (211) brings about shortening of the pressure increase pauses and/or augmenting of the pressure increase pulses.

21. Device as claimed in any one of claims 14 to 20,
**characterized by** a primary brake control which acts at least according to the running behavior of one or more wheels, and a secondary component or control for the adjustment of the nominal pressure gradient according to the actual pressure determined.

22. Device as claimed in any one of claims 14 to 21,
**characterized in that** the second discovering device (230) receives output values of the first discovering device (220) and determines the actual pressure from the said values and according to parameters of the brake system by way of a pressure model.

23. Device as claimed in any one of claims 14 to 22,
**characterized in that** the device is part of a traction slip control system.

## Revendications

1. Procédé de réglage de la pression de freinage d'un frein de roue comportant les étapes suivantes :
détermination d'un gradient provisoire de la pression de consigne dans une régulation des freins,
détermination de signaux de commande pour une pompe hydraulique et/ou d'au moins une soupape hydraulique en vue du réglage du gradient de la pression de consigne,
détermination de la pression réelle à l'aide d'un modèle de pression,
détermination du patinage d'une roue motrice,
**caractérisé par** les étapes suivantes :
comparaison de la pression réelle à une première valeur seuil qui est inférieure à la pression de freinage maximale possible, et comparaison du patinage de la roue, dans la mesure où il s'agit d'un patinage d'entraînement, à une deuxième valeur seuil,
dans lequel, lorsque la pression réelle et le patinage de la roue dépassent les valeurs seuil respectives, le gradient provisoire de la pression de consigne est relevé.

2. Procédé selon la revendication 1, **caractérisé en ce que** la première valeur seuil est déterminée suivant des états de fonctionnement du véhicule.

3. Procédé selon la revendication 2, **caractérisé en ce que** la première valeur seuil est inférieure à 60 pour cent de la pression de freinage maximale possible.

4. Procédé selon la revendication 2 ou 3, **caractérisé en ce que** la première valeur seuil et/ou la deuxième valeur seuil sont déterminées en fonction de la motorisation et/ou de la répartition de la charge sur les essieux et/ou du poids du véhicule et/ou de la conception du système de freinage.

5. Procédé selon l'une des revendications précédentes, **caractérisé en ce qu'**après relèvement du gradient de la pression de consigne, celui-ci est conservé jusqu'au passage au-dessous de l'une des valeurs seuil, après quoi il est modifié.

6. Procédé selon l'une des revendications précédentes, **caractérisé en ce qu'**après relèvement du gradient de la pression de consigne, celui-ci est conservé jusqu'à ce que l'accélération de patinage soit négative, après quoi il est modifié.

7. Procédé selon l'une des revendications précédentes, **caractérisé en ce que** le relèvement du gradient de la pression de consigne s'effectue en fonction du comportement en oscillations de la régulation.

8. Procédé selon l'une des revendications précédentes, **caractérisé en ce que** le gradient de la pression de consigne est relevé par raccourcissement des pauses de montée en pression et/ou par accroissement des impulsions de montée en pression.

9. Procédé selon l'une des revendications précédentes, **caractérisé en ce que** le gradient de la pression de consigne est déterminé dans une régulation d'asservissement en fonction du comportement au roulement d'une ou de plusieurs roues, et est réglé dans une composante ou régulation asservie en fonction de la pression réelle déterminée.

10. Procédé selon l'une des revendications précédentes, **caractérisé en ce que** pour la détermination de la pression réelle à l'aide d'un modèle de pression, la pression réelle est déterminée en fonction de paramètres du système de freinage ainsi qu'en fonction de signaux de commande pour le système de freinage.

11. Procédé selon l'une des revendications précédentes, **caractérisé en ce que** la deuxième valeur seuil est supérieure à 50 km/h.

12. Procédé selon l'une des revendications précédentes, **caractérisé en ce qu'**il n'est pas mis en oeuvre au-dessus d'une vitesse limite du véhicule.

13. Procédé selon l'une des revendications précédentes, **caractérisé en ce qu'**il fait partie d'un procédé de régulation du patinage d'entraînement.

14. Dispositif de réglage de la pression de freinage d'un frein de roue, comportant :
une composante de régulation (210) pour déterminer un gradient provisoire de la pression de consigne d'un frein hydraulique en fonction de signaux d'entrée reçus,
un premier dispositif de détermination (220) pour déterminer des signaux de commande pour une pompe hydraulique et/ou au moins une soupape hydraulique pour le réglage du gradient de la pression de consigne,
un deuxième dispositif de détermination (230) pour déterminer la pression réelle à l'aide d'un modèle de pression,
des capteurs de roue (111 à 114) pour déterminer le comportement au roulement d'une roue motrice, le patinage de cette roue étant déterminé à partir de celui-ci,
**caractérisé par**
un premier dispositif de comparaison (241) pour comparer la pression réelle fournie par le deuxième dispositif de détermination (230) à une première valeur seuil qui est inférieure à la pression de freinage maximale possible,
un deuxième dispositif de comparaison (242) pour comparer le patinage de la roue, dans la mesure où il s'agit d'un patinage d'entraînement, à une deuxième valeur seuil, et
un dispositif de variation (211) qui, lorsque la pression réelle et le patinage de la roue dépassent les valeurs seuil respectives, relève le gradient provisoire de la pression de consigne.

15. Dispositif selon la revendication 14, **caractérisé par** un premier dispositif de détermination (251) qui détermine la première valeur seuil en fonction d'états de fonctionnement du véhicule.

16. Dispositif selon la revendication 15, **caractérisé en ce que** le premier dispositif de détermination (251) détermine la première valeur seuil de manière qu'elle soit inférieure à 60 pour cent de la pression de freinage maximale possible.

17. Dispositif selon la revendication 15 ou 16, **caractérisé en ce que** la première valeur seuil et/ou la deuxième valeur seuil sont déterminées en fonction de la motorisation et/ou de la répartition de la charge sur les essieux et/ou du poids du véhicule et/ou de la conception du système de freinage.

18. Dispositif selon l'une des revendications 14 à 17, **caractérisé en ce qu'**après relèvement du gradient de la pression de consigne, celui-ci est conservé jusqu'au passage au-dessous de l'une des valeurs seuil, après quoi il est modifié.

19. Dispositif selon l'une des revendications 14 à 18, **caractérisé par** un dispositif de détermination de l'accélération de patinage (260) qui agit sur le dispositif de variation (211).

20. Dispositif selon l'une des revendications 14 à 19, **caractérisé en ce que** le dispositif de variation (211) provoque le raccourcissement des pauses de montée en pression et/ou l'accroissement des impulsions de montée en pression.

21. Dispositif selon l'une des revendications 14 à 20, **caractérisé par** une régulation des freins d'asservissement et qui agit au moins en fonction du comportement au roulement d'une ou de plusieurs roues, et par une composante ou régulation asservie pour le réglage du gradient de la pression de consigne en fonction de la pression réelle déterminée.

22. Dispositif selon l'une des revendications 14 à 21, **caractérisé en ce que** le deuxième dispositif de détermination (230) reçoit des valeurs de sortie du premier dispositif de détermination (220) et détermine, à partir de celles-ci, ainsi qu'en fonction de paramètres du système de freinage, la pression réelle à l'aide d'un modèle de pression.

23. Dispositif selon l'une des revendications 14 à 22, **caractérisé en ce qu'**il fait partie d'une régulation du patinage d'entraînement.
